# EUROPEAN PATENT APPLICATION

(11) **EP 4 745 842 A1**
(43) Date of publication of application: **20.05.2026**
(21) Application number: 24383241.7
(22) Date of filing: 15.11.2024
(51) Int. Cl.: G06N 3/0455, G06N 3/063, G06N 3/098, G06F 9/50

(54) **SCHEDULING SHARED EXPERTS IN MIXTURE-OF-EXPERT SYSTEMS WITH ALL-TO-ALL OPERATIONS**

(71) Applicant: Databricks Inc., San Francisco, CA 94105 (US)
(72) Inventor: Chiley, Vitaliy A., San Diego (US); Gonzalez Ortiz, Jose Javier, Madrid (ES)
(74) Representative: Carpmaels & Ransford LLP

(57) **Abstract**

A data processing service schedules execution of operations for shared experts for a MoE-based feed forward network (FFN) of a machine-learning model (e.g., transformer architecture) while all-to-all (A2A) operations for a set of experts are performed for a set of devices (e.g., graphic processor unit (GPU) devices). By scheduling operations of shared experts with the A2A operations, the data processing service may incorporate shared experts without having to schedule additional time and/or resources, leading to shorter processing times and increased computational efficiency.

## Description

### TECHNICAL FIELD

The disclosed configuration relates generally to training machine-learning models, and more particularly to scheduling during all-to-all communications for mixture-of-expert (MoE) systems for machine-learning transformer models.

### BACKGROUND

A data processing service often manages a significant amount of data for one or more entities, such as unstructured data or structured data, and provides various services using the data. The data processing service configures training and deployment of machine-learning models, such as transformer models, that process sequences of input tokens to generate one or more output tokens. A machine-learning model may include one or more feed forward networks (FFNs) that are configured to perform one or more operations. One way to execute a FFN is to configure a set of expert networks as a mixture-of-experts (MoE). During a first all-to-all (A2A) operation, each input in a sequence of tokens is routed to one or more experts. The selected experts process the input to generate one or more outputs. During a second A2A operation, the outputs for each input token are combined to generate the outputs for the FFN. However, since A2A operations are communication steps between devices, the operations cause a degree of latency and leaves the GPU's tensor cores unutilized or underutilized.

### BRIEF DESCRIPTION OF THE DRAWINGS

The disclosed embodiments have other advantages and features which will be more readily apparent from the detailed description, the appended claims, and the accompanying figures (or drawings). A brief introduction of the figures is below.
Figure (FIG.) 1 is a high-level block diagram of a system environment for a data processing service, in accordance with an embodiment.
FIG. 2A illustrates an example transformer block of a transformer model, in accordance with an embodiment. FIG. 2B illustrates an example feed forward network (FFN) block, in accordance with an embodiment.
FIG. 3 illustrates a block diagram of an architecture of a control layer, in accordance with an embodiment.
FIG. 4 illustrates a block diagram of an architecture of a compute resource, in accordance with an embodiment.
FIG. 5A is a process of scheduling shared experts with all-to-all (A2A) operations, in accordance with an embodiment. FIG. 5B is a process of scheduling shared experts with A2A operations, in accordance with another embodiment.
FIGs. 6A-6E is a block diagram illustrating executing a mixture-of-experts (MoEs) for a feed forward network (FFN), in accordance with an embodiment.
FIG. 7 is a process of scheduling gradient computations for shared experts with all-to-all (A2A) operations during a backward pass step of an iteration, in accordance with an embodiment.
FIG. 8 is a timing diagram illustrating timing for scheduling shared experts with A2A operations, in accordance with an embodiment.
FIGs. 9A-9B is a flowchart of a method of scheduling shared experts with A2A operations, in accordance with an embodiment.
FIG. 10 is a block diagram illustrating an example machine to read and execute computer readable instructions, in accordance with an embodiment.

The figures depict various embodiments of the present invention for purposes of illustration only. One skilled in the art will readily recognize from the following discussion that alternative embodiments of the structures and methods illustrated herein may be employed without departing from the principles of the invention described herein.

### DETAILED DESCRIPTION

The figures depict various embodiments of the present configuration for purposes of illustration only. One skilled in the art will readily recognize from the following discussion that alternative embodiments of the structures and methods illustrated herein may be employed without departing from the principles of the configuration described herein.

Reference will now be made in detail to several embodiments, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

### CONFIGURATION OVERVIEW

The configuration disclosed herein schedules execution of operations for shared experts for a MoE-based feed forward network (FFN) of a machine-learning model (e.g., transformer architecture) while all-to-all (A2A) operations for a set of experts are performed for a set of hardware accelerator equipped devices (e.g., GPU devices). A2A operations involve inter-device communications to transmit and receive tokens for processing by different expert networks configured on the set of devices, and most or all of the tensor cores of the device remain idle or unused during this period of time. Moreover, in MoE systems, shared experts are commonly applied to all input tokens for all devices and have technical advantages and can lead to higher performance of the model. By scheduling operations of shared experts with the A2A operations, the data processing service may incorporate shared experts without having to schedule additional time and/or resources, leading to shorter processing times and increased computational efficiency.

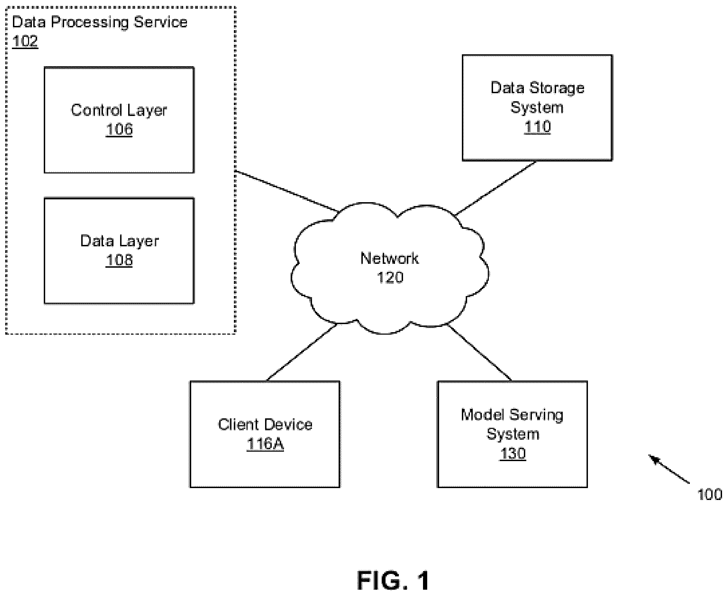

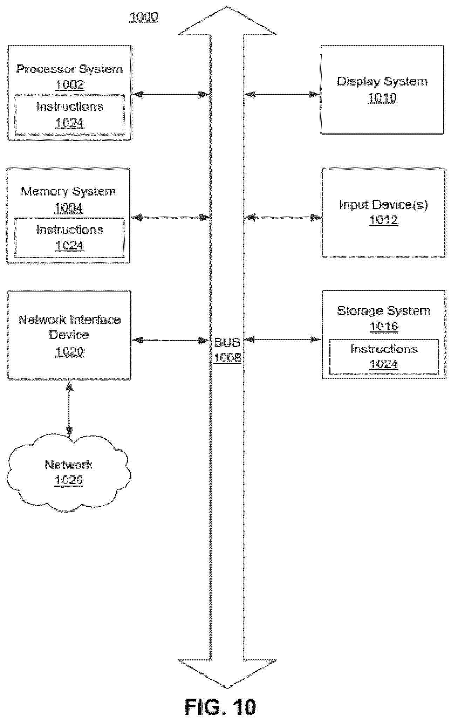

Figure (FIG.) 1 is a high-level block diagram of a system environment 100 for a data processing service 102, in accordance with an embodiment. The system environment 100 shown by FIG. 1 includes one or more client devices 116A, 116B, a network 120, a data processing service 102, a data storage system 110, and/or a model serving system 130. In alternative configurations, different and/or additional components may be included in the system environment 100. The computing systems of the system environment 100 may include some or all of the components (systems (or subsystems)) of a computer system 1000 as described with FIG. 10. In some embodiments, the computing devices may be configured with software to function as specifically described herein. For example, program code comprised of instructions may cause a processing system to be structured in a manner so that the device operates the specific functionality upon execution of the program code.

The data processing service 102 is a service for managing and coordinating data processing services (e.g., database services) to users of client devices 116. The data processing service 102 may manage one or more applications that users of client devices 116 can use to communicate with the data processing service 102. Through an application of the data processing service 102, the data processing service 102 may receive requests (e.g., database queries) from users of client devices 116 to perform one or more data processing functionalities on data stored, for example, in the data storage system 110. In one embodiment, the requests may include machine learning and artificial intelligence (AI) related requests on data stored by the data storage system 110. The data processing service 102 may provide responses to the requests to the users of the client devices 116 after they have been processed.

In one embodiment, as shown in the system environment 100 of FIG. 1, the data processing service 102 includes a control layer 106 and a data layer 108. The components of the data processing service 102 may be configured by one or more servers and/or a cloud infrastructure platform. In one embodiment, the control layer 106 receives data processing requests and coordinates with the data layer 108 to process the requests from client devices 116. The control layer 106 may schedule one or more jobs for a request or receive requests to execute one or more jobs from the user directly through a respective client device 116.

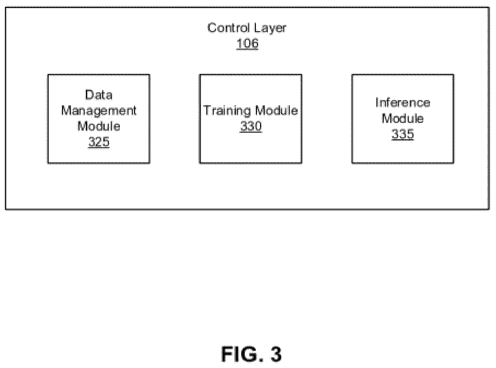

The data layer 108 includes multiple clusters of compute resources that execute one or more jobs received from the control layer 106. Accordingly, the data layer 108 may include compute resources for executing the jobs. An example of a compute resource is described in relation to FIG. 3 below. In one instance, the clusters of computing resources are virtual machines or virtual data centers configured on a cloud infrastructure platform. In one instance, the control layer 106 is configured as a multi-tenant system and the data layers 108 of different tenants are isolated from each other. In one embodiment, a serverless implementation of the data layer 108 may be configured as a multi-tenant system with strong virtual machine (VM) level tenant isolation between the different tenants of the data processing service 102. As an example, each customer of the data processing service 102 represents a tenant of a multi-tenant system and shares software applications and also resources such as databases of the multi-tenant system. Each tenant's data is isolated and remains invisible to other tenants. However, it is appreciated that in other embodiments, single tenant architectures may be used.

The data layer 108 thus may be accessed by, for example, a developer through an application of the control layer 106 to execute code developed by the developer. In one embodiment, the compute resources are configured with one or more hardware accelerators, such as graphic processor units (GPUs), tensor processor units (TPUs), neural processing units (NPUs) that can accelerate the training or inference process of large-scale machine learning models or AI models. Thus, the data layer 108 may include resources not available to a developer on a local development system, such as powerful computing resources to process very large data sets.

In one embodiment, the data processing service 102 described herein schedules execution of operations for shared expert networks for a MoE-based feed forward network (FFN) of a machine-learning model (e.g., transformer architecture) while all-to-all (A2A) operations for a set of experts are performed for a set of devices (e.g., graphic processor unit (GPU) devices). In one embodiment, the machine-learning model is a transformer model including one or more transformer blocks, each with an attention block and a feed forward network (FFN).

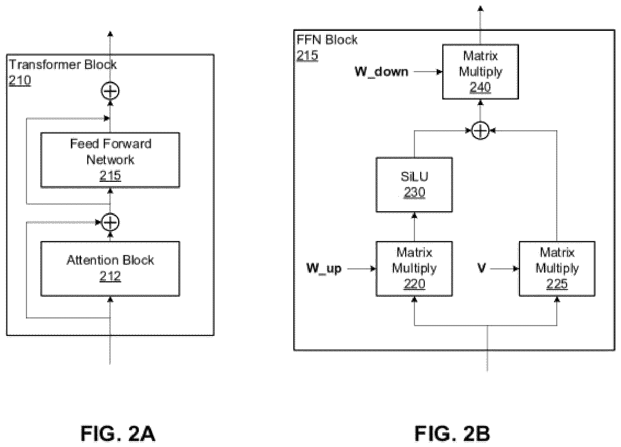

FIG. 2A illustrates an example transformer block of a transformer model, in accordance with an embodiment. FIG. 2B illustrates an example feed forward network (FFN) block, in accordance with an embodiment. In one embodiment, the transformer model includes a plurality of transformer blocks. A transformer block 210 includes an attention block 212 and a FFN 215. Given one or more token sequences as inputs, the attention block 212 is coupled to receive the token sequences and generate attention outputs. The attention outputs are combined with the token sequences and provided to the FFN 215 as inputs. The FFN 215 is coupled to receive the inputs and generate FFN outputs. The FFN outputs are combined with the inputs to generate outputs of the transformer block 210.

In one embodiment, the FFN block 215 is configured as a gated linear unit (GLU), as illustrated in FIG. 2B. Given a batch of token sequences as inputs, the matrix multiply block 220 is coupled to receive the inputs and perform a matrix multiplication operation with a set of wights **W_up** to generate outputs. The matrix multiply block 225 is coupled to receive the inputs and perform a matrix multiplication operation with a set of weights **V** to generate outputs. The outputs from the matrix multiply block 220 are provided to the SiLU block 230 as inputs to generate SiLU outputs. The outputs from the matrix multiply block 225 are combined with SiLU outputs and provided as inputs to the matrix multiply block 240. The matrix multiply block 240 is coupled to receive the inputs and perform a matrix multiplication operation with a set of weights **W_down** to generate outputs of the FFN block 215. While the example FFN block 215 shown in FIG. 2B illustrates an embodiment where a SiLU operation 230 is performed, it is one example variant of how a FFN block 215 can be configured. It is appreciated that in other embodiments, any appropriate set of operations can be used to configure the FFN block 215. For example, the FFN block 215 can be configured with the general gated linear unit (GeGLU) block or rectified linear unit (ReLU) block in addition or instead of the SiLU operation 230.

As described in further detail below, in one embodiment, the FFN block is configured as a mixture-of-experts (MoE) architecture that includes a set of expert networks GLU_0, GLU_1, ..., GLU_N. In one embodiment, each network may be configured as a GLU unit, similar to that described in FIG. 2B but with dedicated weights for the respective expert. In one instance, the data processing service 102 trains the transformer model on one or more compute resources configured with a set of devices. As an example, the devices are hardware accelerators such as GPUs, TPUs, and the like. In one instance, each device is dedicated to executing operations of a respective expert network for a FFN block.

In one embodiment, the set of devices perform all-to-all (A2A) operations that involve inter-device communications to transmit and receive tokens for processing by different expert networks configured on the set of devices, and most or all of the tensor cores of the device remain idle or unused during this period of time. An A2A operation may be defined as a process where each device provides or/and receives data to and/or from other devices. During a forward pass of the training process, the data may be tokens; during a backward pass, the data may be gradients for the tokens. Moreover, in MoE systems, shared experts GLU_S are expert networks commonly applied to input tokens for all devices. An output token from the shared expert is combined with the respective output token from the selected expert for the token. The shared expert has technical advantages and leads to a model with higher accuracy potentially because of increased training stability. As described in further detail below, by scheduling the operations of the shared experts with the A2A operations, the data processing service 102 may incorporate shared experts without having to schedule additional time and/or resources, leading to shorter processing times and increased computational efficiency.

The data storage system 110 includes a device (e.g., a disc drive, a hard drive, a semiconductor memory) used for storing database data (e.g., a stored data set, at least a portion of a stored data set, data for executing a query). The data storage system 110 may store data in the format of data tables, unstructured or structured data, and the like, that can be used to train or perform inference using the machine learning models described herein. For example, the data storage system 110 may store significant amounts of training data that can be used to train or fine tune parameters of machine learning models. In one embodiment, the data storage system 110 may also store trained models (e.g., parameters of the models) that have been trained by compute resources of the data processing service 102.

In one embodiment, the data storage system 110 includes a distributed storage system for storing data and may include a commercially provided distributed storage system service. Thus, the data storage system 110 may be managed by a separate entity than an entity that manages the data processing service 102, for example, a customer or user of the data processing service 102. In another embodiment, the data management system 110 may be managed by the same entity that manages the data processing service 102. Thus, coupled with the serverless implementation of compute resources of the data layer 108, the data processing service 102 may manage access controls to user data stored in the data storage system 110, maintenance tasks for the user data, and the like so that an entity user of the data processing service 102 without separately configuring and deploying infrastructure.

The client devices 116 are computing devices that display information to users and communicates user actions to the systems of the system environment 100. While two client devices 116A, 116B are illustrated in FIG. 1, in practice many client devices 116 may communicate with the systems of the system environment 100. In one embodiment, client devices 116 of the system environment 100 may include some or all of the components (systems (or subsystems)) of a computer system 1000 as described with FIG. 10.

In one embodiment, a client device 116 executes an application allowing a user of the client device 116 to interact with the various systems of the system environment 100 of FIG. 1. For example, a client device 116 can execute a browser application to enable interaction between the client device 116 and the data processing system 106 via the network 120. In another embodiment, the client device 116 interacts with the various systems of the system environment 100 through an application programming interface (API) running on a native operating system of the client device 116, such as IOS^{®} or ANDROID^{™}.

The model serving system 130 includes resources for deploying one or more machine learning models. In one instance, the machine learning models are large-scale models with a significant number of weights or parameters. The models may be configured to perform natural language processing (NLP) tasks, audio processing tasks, image processing tasks, video processing tasks, and the like. For example, given a prompt, a model may generate a response or expand on the prompt in a human-like text. In one embodiment, the model serving system 130 receives input data (e.g., text data, audio data, image data, or video data) and encodes the input data into a set of input tokens. The model serving system 130 applies the machine learning model to generate the output data (e.g., text data, audio data, image data, or video data) including a set of output tokens.

In one embodiment, the machine learning models are configured as a transformer neural network architecture including one or more attention layers. However, it is appreciated that in other embodiments, the machine learning models can be configured as any other appropriate architecture including, but not limited to, long short-term memory (LSTM) networks, Markov networks, BART, generative-adversarial networks (GAN), diffusion models (e.g., Diffusion-LM), and the like.

In one embodiment, the sequence of input tokens or output tokens are arranged as a tensor with one or more dimensions, for example, one dimension, two dimensions, or three dimensions. As an example, one dimension of the tensor may represent the number of tokens (e.g., length of a sentence), one dimension of the tensor may represent a sample number in a batch of input data that is processed together, and/or one dimension of the tensor may represent a feature in an embedding space. However, it is appreciated that in other embodiments, the input data or output data may be configured as any number of appropriate dimensions depending on whether the data is in the form of image data, video data, audio data, and the like. For example, for three-dimensional image data, the input data may be a series of pixel values arranged along a first dimension and a second dimension, and further arranged along a third dimension corresponding to RGB channels of the pixels.

In one embodiment, the language models are large-scale models that are trained on a large corpus of training data (e.g., texts, images, audio, or video). For example, when the model is an LLM, the LLM may be trained on massive amounts of text data, often involving millions or billions of words or text units. The large amount of training data from various data sources allows the LLM to generate outputs for many inference tasks. A machine-learning model may have a significant number of parameters in a deep neural network (e.g., transformer architecture), for example, at least 1 billion, at least 50 billion, at least 100 billion, at least 500 billion, at least 1 trillion, at least 2 trillion parameters.

Since the weight size and the amount of computational power for training or performing inference on the machine learning models may be significantly high, in one embodiment, the model serving system 130 is configured an infrastructure configured with, for example, supercomputers that provide enhanced computing capability via one or more hardware accelerators, such as graphic processor units (GPUs), tensor processor units (TPUs), and/or neural processor units (NPUs). In one instance, the models may be trained and hosted on a cloud infrastructure service provided by the data processing service 102.

FIG. 3 is a block diagram of an architecture of a control layer 106, in accordance with an embodiment. In one embodiment, the control layer 106 includes a data management module 325, a training module 330, and/or an inference module 335.

The data management module 325 generates and manages the training datasets for training one or more machine-learning models that are to be deployed on the model serving system 130 and/or on other systems by the data processing service 102. In one embodiment, the training dataset may be stored or is constructed from data stored in the data storage system 110. In one instance, for a given model to be trained, the data management module 325 obtains a training dataset including a set of samples. For example, a training sample includes inputs and known outputs for the inputs.

In one embodiment, as the machine learning models are deployed and users perform inference using the machine learning models, the data management module 325 may obtain feedback from users with respect to the outputs that were generated by the machine learning models during the inference process. In such an embodiment, the data management module 325 obtains feedback to determine whether the feedback is positive or negative, and the data management module 325 may update the training dataset to include training instances where the outputs were known to have positive feedback from the user. The updated training dataset may then be used to fine-tune parameters of the machine learning models.

The training module 330 instructs and coordinates training of one or more machine learning models. In one embodiment, the training module 330 coordinates training on compute resources of the data layer 108 and/or the control layer 106 (e.g., serverless compute) that are configured with multiple hardware accelerators to accelerate the training process of large-scale models.

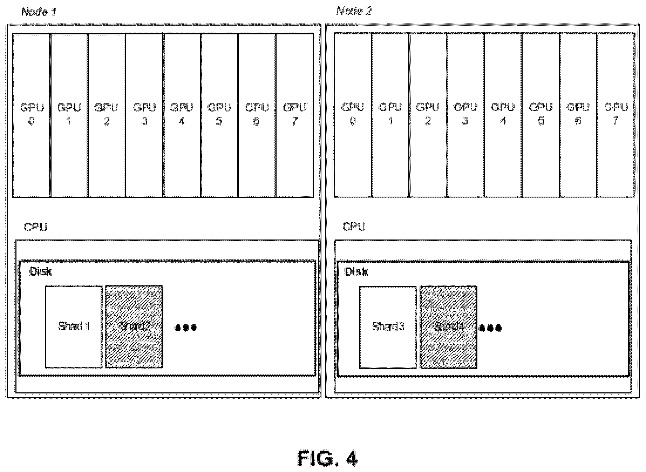

FIG. 4 illustrates a block diagram of an architecture of a compute resource, in accordance with an embodiment. In one embodiment, the compute resource of data layer 108 or control layer 106 is configured with one or more server nodes. A server node may include one or more central processing units (CPUs) and one or more hardware accelerators. In the example shown in FIG. 4, the hardware accelerators are configured as graphic processor units (GPUs), but it is appreciated that in other embodiments, the hardware accelerators may be configured as a different type of accelerator. In the implementation shown in FIG. 4, one node has eight GPUs. Each GPU may be configured with high-bandwidth memory (HBM) and local memory (e.g., SRAM) to store data such as model parameters, intermediate states, and the like during training and inference.

### Scheduling Shared Expert Operations with A2A Operations for Set of Experts

In one embodiment, the training module 330 trains weights for a machine-learning model including one or more FFN blocks. A FFN block in the machine-learning model may be configured as a MoE architecture with a set of expert networks. The training module 330 schedules operations for shared expert networks during the A2A operations of the set of expert networks. In one embodiment, the training module 330 trains weights for a machine-learning model by instructing the compute resources to repeatedly iterate between a forward pass step and a backward pass step to reduce a loss function. Each training iteration processes a batch of training samples that include a set of samples from the training data. For example, one batch of training samples may include 200 samples from the training data.

### 1. Forward Pass

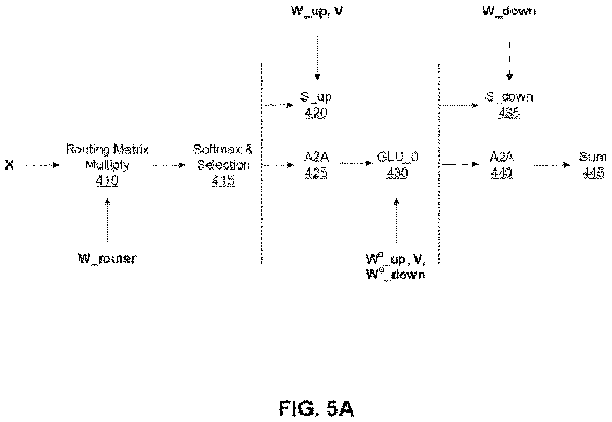

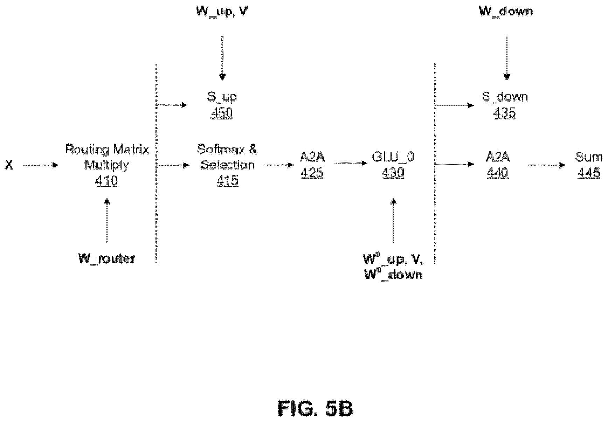

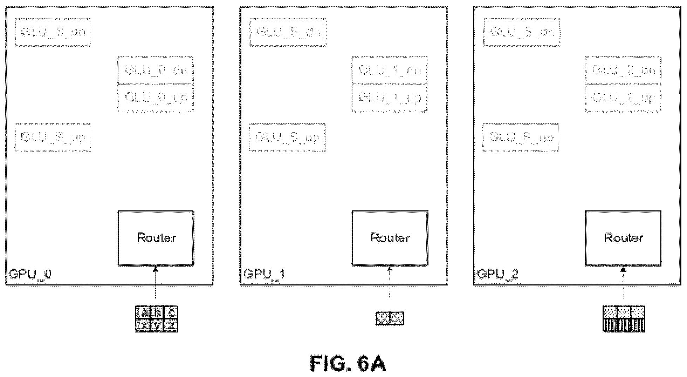

FIG. 5A is a process of scheduling shared experts with all-to-all (A2A) operations during a forward pass step of an iteration, in accordance with an embodiment. FIG. 5B is a process of scheduling shared experts with A2A operations during a forward pass step of an iteration, in accordance with another embodiment. FIGs. 6A-6E is a block diagram illustrating execution of MoEs and shared experts for a FFN, in accordance with an embodiment.

During the forward pass of a current iteration of the training process, the compute resource accesses a set of devices each configured with hardware accelerators. For example, the compute resource may access three devices, GPU_0, GPU_1, GPU_2, that were illustrated in the compute resource of FIG. 4. In one embodiment, one device is dedicated to executing operations of a corresponding expert network in the set of expert networks. In the example shown in FIG. 6A, device GPU_0 is dedicated to expert network GLU_0, device GPU_1 is dedicated to expert network GLU_1, and device GPU_2 is dedicated to expert network GLU_2.

The training module 330 identifies one or more batches of token sequences from a training dataset for the iteration. Each device is provided with a respective batch of token sequences of dimensionality B × S × F, where B is the number of instances in the batch, S is the sequence length of each sequence, and F is the feature dimensionality of a token. In the example illustrated in FIG. 6A, device GPU_0 receives a batch of two token sequences including a first sequence `a b c' and a second sequence `x y z.' While each token is represented as a character in the figure, in reality, each token may represent a word, a sub-word, and the like. Similarly, device GPU_1 receives a batch of two token sequences and device GPU_2 receives a batch of two token sequences.

For a given device, the compute resource executes the operations of a router on the respective batch of token sequences for the device. In one embodiment, each device retrieves the necessary weights and parameters for executing the operations of the router. In one embodiment, each device is configured with a common router instance, and therefore, the weights associated with the router instance **W_router** is the same across the set of devices. As shown in FIG. 5A, a first operation of the router is to perform a routing matrix multiply operation 410 that multiplies a weight matrix **W_router** with inputs **X** (e.g., batch of token sequences to the device) to generate an intermediate output.

A second operation of the router is to perform a softmax operation and a selection operation 415. The output of the softmax operation indicates, for each input token, a set of likelihoods the input token should be processed by each of the set of experts. After, the selection operation selects, for each token, one or more experts that should process the token. In one embodiment, the selection operation is a top K operation with K = 1, and one expert is selected for each token. However, it is appreciated that in other embodiments, K can be any number of experts. In the example shown in FIG. 6A, the second expert GLU_1 is selected for the tokens 'c' and 'y' based on the likelihoods and the first expert GLU_0 is selected for the remaining tokens 'a,' 'b,' 'x,' 'z' in the batch for the first device GPU_0. Similar operations are performed at other devices with the respective batch of token sequences. Thus, for a given device, the compute resource selects a first subset of tokens for processing with the dedicated expert for the device and selects a second subset of tokens to process with a subset of experts on a subset of other devices in the set.

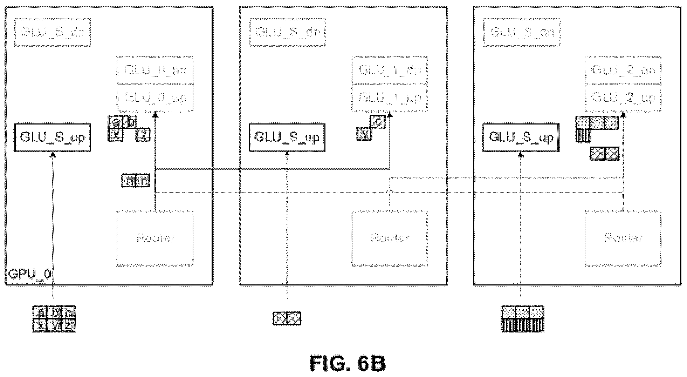

For a given device, a first A2A operation 425 is performed to transmit the second subset of tokens to a subset of other devices. Moreover, a third subset of tokens from other devices are also received for the device. For the first device GPU_0 in FIG. 6B, tokens 'c' and 'y' are transmitted to the second device GPU_1 as the second expert is GLU_1 will be configured on the second device GPU_1, and the tokens 'a,' `b,' `x,' `z' remain at the first device GPU_0 as the first expert will be configured on the first device GPU_0. Moreover, the first device GPU_0 receives tokens 'm' and 'n' from the third device GPU_2. Specifically, the operations of the router instance at the third device GPU_2 determined that tokens 'm' and 'n' should be processed by the first expert.

In one embodiment, while performing the first A2A operation 425, the compute resource executes at least a portion of operations S_up 420 of a shared expert GLU_S on the batch of token sequences for each respective device. In one embodiment, each device is configured with a common shared expert instance, and therefore, the weights associated with the shared expert instance **W_up, V, W_down** are the same across the set of devices. The operations of the shared expert may also be identical or substantially similar to the GLU described in conjunction with FIG. 2B. Therefore, while a token might be processed by only one expert in the set of experts GLU_0, GLU_1, ..., GLU_N, the shared expert GLU_S is designed to be executed on every token in the batches for the current iteration.

In one embodiment, the portion of the shared expert that is executed during the first A2A operation is an up projection operation including matrix multiplication operations with **W_up** and matrix multiplication operations with **V**, denoted by "GLUS up" in FIG. 6B. Each device may retrieve the necessary weights and parameters for executing the up projection operation of the shared expert. As shown in FIG. 6B, for the first device GPU_0, the operations GLU_S _up are executed on the original batch of token sequences 'a b c' and 'x y z' to generate the intermediate outputs. Similar processes are performed at the second device GPU_1 and the third device GPU_2. In particular, at least a portion of the first A2A operation and a portion of the shared expert operations may overlap in time.

Since the first A2A operation is a communication step between different devices to transmit and receive tokens, the operation does not extensively use the tensor cores of the devices for compute and may remain unused or idle. However, by scheduling the up projection operation of a shared expert during the first A2A operation, the compute resource takes advantage of the available resources of the tensor cores (or other types of special architecture for cores of the accelerator) to execute a portion of a shared expert network that often involve matrix multiplications often with large matrices. The tensor cores of hardware accelerators may perform a high-degree of computation while the inter-device communications are occurring during the A2A operations.

The compute resource executes operations of the chosen set of experts 430 for each respective set of tokens as determined by the router instances. For example, the compute resource executes at least a portion or all of the operations of the dedicated expert for each device on the first subset of tokens and the third subset of tokens received from other devices. For example, for a first device GPU_0, the GLU_0 operation is performed on the tensor cores of the device. In one embodiment, each device is configured with a dedicated expert, and thus, the weights associated with the expert network GLU_i for the device **Wⁱ_up, Vⁱ, Wⁱ_down** are different across the set of devices, although the order of operations may be identical or substantially similar to the GLU described in conjunction with FIG. 2B.

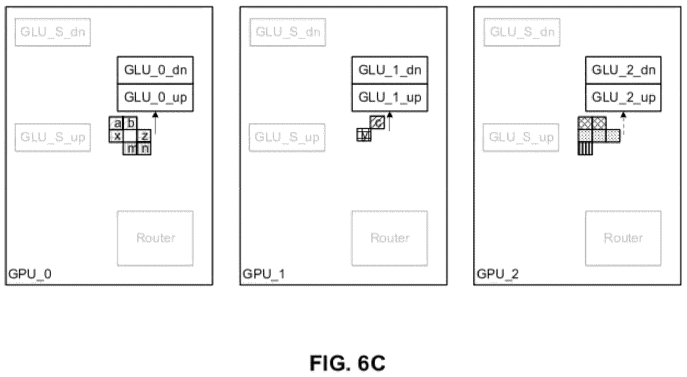

In one embodiment, for a given device, both the up projection and the down projection operations of the dedicated expert are executed on each respective device. Each device may retrieve the necessary weights and parameters for executing the up projection operation and the down projection operation of the dedicated expert. As shown in FIG. 6C, the first device GPU_0 may retrieve weights **W⁰_up, V⁰, W⁰_down** for the first device GPU_0, weights **W¹_up, V¹, W¹_down** for the second device GPU_1, and weights **W²_up, V², W²_down** for the third device GPU_2. As an example, for the first device GPU_0, the operations GLU_0_up (i.e., up projection operation for the first expert GLU_0) and GLU_0_dn (i.e., down projection operation for the first expert GLU_0) are executed on the first subset of tokens 'a,' `b,' `x,' 'z' and the third subset of tokens 'm,' 'n' received from other devices. Similar operations are performed at the remaining devices.

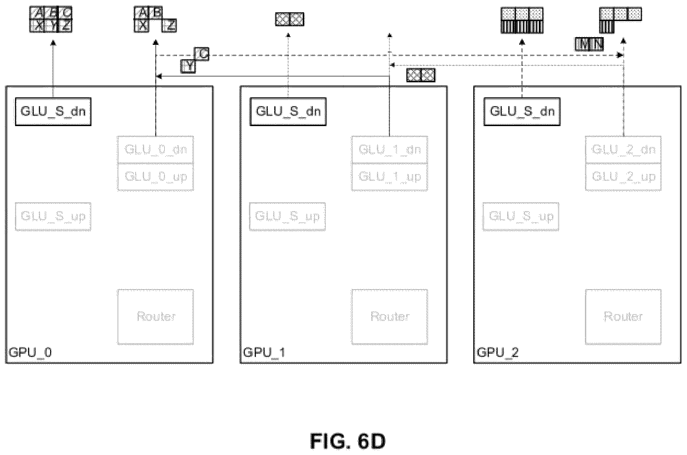

For a given device, a second A2A operation 440 is performed to transmit the outputs tokens for the third subset of tokens to the respective devices that transmitted the tokens during the first A2A operation. Moreover, the output tokens for the second subset of tokens are received from the subset of devices that had received the tokens during the first A2A operation. In the example shown in FIG. 6D, the first device GPU_0 obtains the outputs `A,' `B,' `X,' 'Z' that were obtained by applying the first expert network on the first subset of tokens 'a,' `b,' `x,' `z.' The first device GPU_0 transmits the outputs `M,' 'N' that were obtained by applying the first expert network on the third subset of tokens `m,' 'n' back to the third device GPU_2. The first device GPU_0 also receives outputs 'C,' 'Y' that were obtained by applying the second expert network on the second subset of tokens `c,' 'y' from the second device GPU_1.

In one embodiment, while performing the second A2A operation 440, the compute resource executes at least a remaining portion of operations S_down 435 of shared expert GLU_S on intermediate outputs for each respective device. In one embodiment, the portion of the shared expert that is executed during the second A2A operation is the down projection operation including the SiLU operation and the matrix multiplication operations with **W_down**, denoted by "GLU_S_dn" in FIG. 6D. Each device may retrieve the necessary weights and parameters for executing the down projection operation of the shared expert. The outputs of the shared expert are obtained. In the example shown in FIG. 6D, the first device GPU_0 executes the operation GLU_S_dn on intermediate outputs that were obtained from executing the GLU_S_up operation to obtain output tokens '*A*,' '*B*,' '*C*' and '*X*,' '*Y*,' '*Z*.' In particular, at least a portion of the second A2A operation and a remaining portion of the shared expert operations may overlap in time.

Similar to the first A2A operation, since the second A2A operation is a communication step between different devices to transmit and receive tokens, the operation does not extensively use the tensor cores of the devices for compute and may remain unused or idle. However, by scheduling the remaining down projection operation of the shared expert during the second A2A operation, the compute resource takes advantage of the available resources of the tensor cores to execute a remaining portion of a shared expert network.

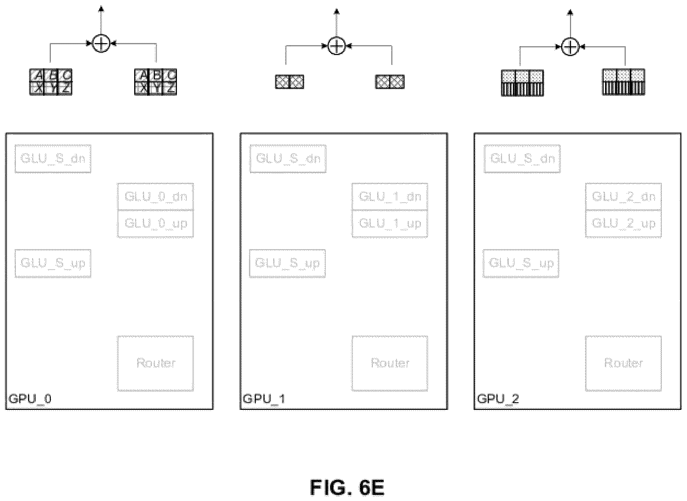

The compute resource generates estimated outputs for the FFN block based at least on the outputs from the shared expert and the dedicated expert for each device. Specifically, the outputs for each corresponding token are combined together to generate the estimated outputs for the FFN block. As shown in FIG. 6E, the output tokens 'A' and '*A*' are combined, 'B' and *'B'* are combined, 'C' and 'C' are combined, 'X' and 'A' are combined, 'Y' and '*Y*' are combined, and 'Z' and `Z' are combined to generate the outputs of the FFN block.

In one embodiment, as illustrated in FIG. 5B, the up projection operation 450 of the shared expert may be executed soon after the routing matrix multiply operation 410 is performed, rather than starting the execution after the softmax or the selection operation 415. Since the softmax operation and/or the selection operation may not use the tensor cores of the hardware accelerators extensively, the up projection operations may be triggered right after the computationally extensive routing matrix multiply operation 410 is completed.

The estimated outputs for the FFN block may be provided to subsequent layers of the transformer model until estimated outputs are generated at the last layer of the transformer model. The compute resource calculates a loss function that indicates differences between the estimated outputs and known outputs for the sequence.

### 2. Backward Pass

During the backward pass for the current iteration, the compute resource computes the gradient of the loss function with respect to a set of weights of a layer of the machine-learning model, and the gradient is used to update values of the set of weights to reduce the loss function. This process is performed for other sets of weights for other layers of the machine-learning model. Specifically, for a given operation in which the outputs are generated by multiplying a set of weights with inputs to the operation, the gradient of the loss function with respect to the outputs (e.g., dL/dy where L represents loss function and y represents the outputs) is computed and multiplied with the gradient of the outputs with respect to the weights (e.g., dy/dW where W represents set of weights for the operation) via the chain rule to compute the gradient of the weights (e.g., dL/dW). This process is performed starting from the last operation of the machine-learning model and backpropagated until the weights of the first layer are reached, and the gradients of the weights are used to update the values of the weights of the model for the next iteration.

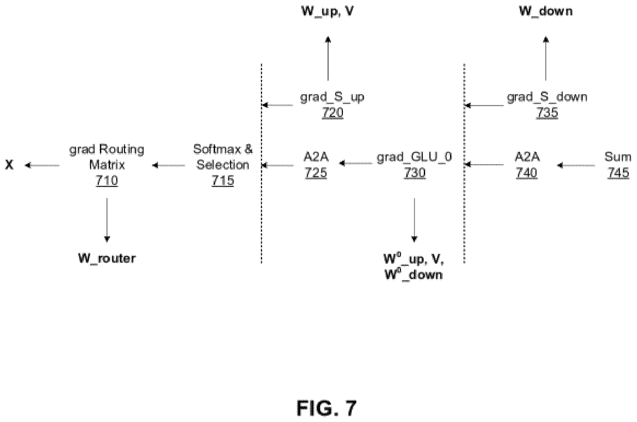

FIG. 7 is a process of scheduling gradient computations for shared experts with all-to-all (A2A) operations during a backward pass step of an iteration, in accordance with an embodiment. In one embodiment, during the backward pass of the current iteration, the gradient computations for the weights of the shared experts are scheduled with A2A operations for communicating the gradients of tokens to their respective set of experts. Specifically, for a given device, the compute resource computes the gradients of the output tokens for the device. For example, the compute resource may compute the gradients of output tokens `A,' `B,' 'C,' `X,' 'Y,' 'Z' illustrated in FIG. 6D.

During the first A2A operation 740 of the backward pass, as device may transmit gradients of the output tokens for the second subset of tokens to the dedicated expert that generated the outputs for these tokens during the forward pass step. Moreover, the device also receives gradients of the output tokens for the third subset of tokens that were sourced from another device but where the expert for the device generated the outputs for these tokens during the forward pass step. As an example, the first device GPU_0 transmits gradients of output tokens 'C,' 'Y' to the second device GPU_1. Moreover, the first device GPU_0 also receives gradients of output tokens `M,' 'N' from the third device GPU_2.

In one embodiment, while performing the first A2A operation 740, the compute resource obtains gradients of output tokens for the shared expert, and executes at least a portion of operations grad_S_down 735 for computing the gradient of weights for the shared expert at each device. In one instance, the portion of the operations is the computation of gradients with respect to weights **W_down** for the down projection operation of the shared expert. For example, the compute resource obtains gradients of output tokens *'A*,' '*B*,' *'C,'* '*X*,' '*Y*,' 'Z' for the shared expert in FIG. 6D, and computes the gradients of the weights **W_down** at each device based on the inputs to the GLU_S_dn at each device. In particular, at least a portion of the first A2A operation and a portion of the gradient computation for weights of the shared expert overlap in time.

The compute resource computes the gradient of the weights of each dedicated expert based on the gradients of output tokens that were obtained and received from the first A2A operation 740. The compute resource performs operations 730 to backpropagate terms obtained from these gradients to the chosen set of experts for each respective set of gradients. As an example, the first device GPU_0 performs operations grad_GLU_0 to compute the gradients of the weights **W⁰_up, V⁰, W⁰_down** of the first expert. Similar processes are performed for weights of other dedicated experts configured at the second device GPU_1 and the third device GPU_2. Moreover, the compute resource also computes the gradient of the input tokens to each respective expert in the set of experts. For example, the first device GPU_0 computes the gradients of input tokens 'a,' 'b,' 'x,' 'z,' 'm,' 'n.'

During the second A2A operation 725 of the backward pass step, a device transmits gradients of the third subset of tokens back to the dedicated expert that had transmitted the tokens to the device during the forward pass step. Moreover, the device also receives gradients of the second subset of tokens from other devices that the device had transmitted the tokens to during the forward pass step. As an example, the first device GPU_0 transmits gradients of the third subset of tokens `m,' 'n' to the third device GPU_2. Moreover, the first device GPU_0 also receives gradients of the second subset of tokens `m,' 'n' from the second device GPU_1.

In one embodiment, while performing the second A2A operation 725, the compute resource executes at least a portion of operations grad_S_up 720 for computing the gradient of remaining weights for the shared expert at each device. In one instance, the operations are computation of gradients for the weights **W_up, V** for the up projection operation of the shared expert. As an example, the compute resource computes the gradients of the weights **W_up, V** at the first device GPU_0 based on the inputs 'a b c' and 'x y z' to the GLU_S _up at each device. In particular, at least a portion of the second A2A operation and a portion of the gradient computation for the shared expert operations may overlap in time.

The compute resource also computes gradients of the weights of the router instance **W_router** based on values of the softmax operation obtained during the forward pass step. For example, the first device GPU_0 performs a gradient routing matrix operation 710 to compute the gradient of the routing matrix **W_router.**

### 3. Timing Diagram for Scheduling Shared Expert Operations with A2A Operations

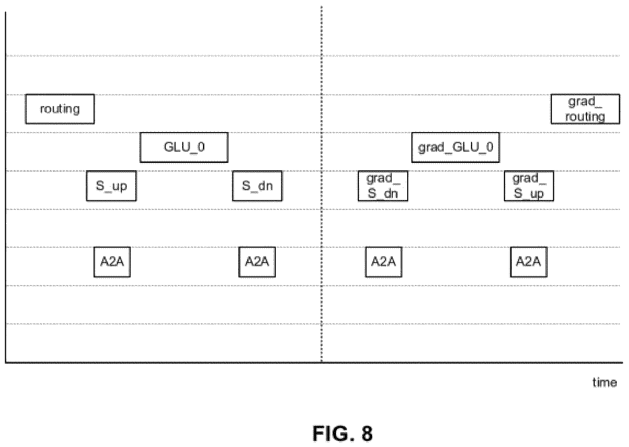

FIG. 8 is a timing diagram illustrating timing for scheduling shared experts with A2A operations, in accordance with an embodiment. The timing diagram in FIG. 8 illustrates a forward pass and a backward pass for one iteration of the training process for a FFN block of the machine-learning model. During the forward pass, a routing operation is performed to route input tokens to the set of devices. While the routing occurs during the first A2A operation of the forward pass step, an up projection operation S_up of a shared expert is performed on each device. After the input tokens are communicated, expert operations for each dedicated expert are executed. Each respective set of tokens have a chosen set of experts that will process these tokens. For example, operations GLU_0 are performed on a first device GPU_0 to executed the first expert. A second A2A operation is performed to communicate output tokens to the set of devices. While the second A2A operation occurs, a down projection operation S_down of the shared expert is performed on each device.

During the backward pass step, a first A2A operation is performed to communicate the gradients of the output tokens to the set of devices. While the A2A operations occur, an operation grad_S_dn to compute the gradients of the weights of the down projection operation of the shared expert is performed. After the gradients are communicated, the gradients of the weights for each dedicated expert are computed. Each respective set of gradients have a chosen set of experts that will use the received gradients for output tokens to update the weights of these chosen experts. As an example, the operations grad_GLU_0 are performed on a first device GPU_0 to compute gradients for the weights of the first expert. A second A2A operation is performed to communicate gradients of the input tokens to the set of devices. While the second A2A operation occurs, an operation grad_S_up is performed to compute the weights of the up projection operation of the shared expert. After, an operation grad_routing is performed to compute the gradients of the weights of the routing instance.

The compute resource updates the weights of the transformer model based on the computed gradients with respect to the weights during the backward pass. This process is repeated for subsequent iterations of the training process until a convergence criteria is reached. In one embodiment, the training module 330 instructs the trained weights of the machine-learning model trained in conjunction with the method described herein to be provided to the model serving system 130, such that the model serving system 130 can deploy the trained machine-learning model. The model serving system 130 receives user requests for inference and generates responses by applying the machine-learning model to inputs in the user requests.

### FLOWCHART FOR SCHEDULING SHARED EXPERT OPERATIONS WITH A2A OPERATIONS FOR MOE

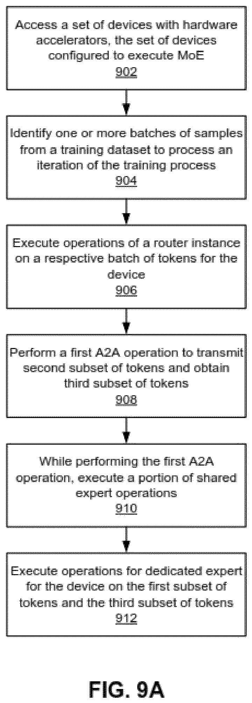

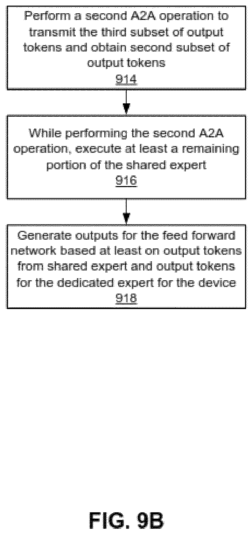

FIGs. 9A-9B is a flowchart of a method of scheduling shared experts with A2A operations, in accordance with an embodiment. The process shown in FIGs. 9A-9B may be performed by one or more components (e.g., the control layer 106 and/or compute resources of the data layer 108) of a data processing system/service (e.g., the data processing service 102). Other entities may perform some or all of the steps in FIGs. 9A-9B. The data processing service 102 as well as the other entities may include some or all of the components of the machine (e.g., computer system) described in conjunction with FIG. 10. Embodiments may include different and/or additional steps, or perform the steps in different orders.

The data processing service 102 accesses 902 accessing a set of devices configured with hardware accelerators. The set of devices may be configured to execute operations for a set of experts of a mixture of experts (MoE) for a feed forward network of a transformer architecture. The data processing service 102 identifies 904 one or more batches of samples from a training dataset to process an iteration of a training process for a machine-learning model. The data processing service 102 for a device, executes 906 operations of a router instance on the respective batch of token sequences for the device to determine a first subset of tokens to process with the dedicated expert for the device and a second subset of tokens to process with a subset of experts on a subset of the devices. The data processing service 102 performs 908 a first all-to-all operation to transmit the second subset of tokens to the subset of devices and to obtain a third subset of tokens from other devices. While performing the first A2A operation, the data processing service 102 executes 901 at least a portion of operations of a shared expert on the batch of token sequences on the device.

The data processing service executes 912 at least a portion of operations of the dedicated expert for the device on the first subset of tokens and the third subset of tokens on the device to generate a first subset of output tokens and a third subset of output tokens. The data processing service 102 performs 914 a second all-to-all operation to transmit the third subset of output tokens to the other devices and obtain a second subset of output tokens from the subset of the devices. While performing the second all-to-all operation, the data processing service executes 916 at least a remaining portion of the operations of the shared expert. The data processing service 102 generates 918 an output for the feed forward network based at least on output tokens from the shared expert and output tokens for the dedicated expert for the device.

Turning now to FIG. 10, illustrated is an example machine to read and execute computer readable instructions, in accordance with an embodiment. Specifically, FIG. 10 shows a diagrammatic representation of the data processing service 102 (and/or data processing system) in the example form of a computer system 1000. The computer system 1000 is structured and configured to operate through one or more other systems (or subsystems) as described herein. The computer system 1000 can be used to execute instructions 1024 (e.g., program code or software) for causing the machine (or some or all of the components thereof) to perform any one or more of the methodologies (or processes) described herein. In executing the instructions, the computer system 1000 operates in a specific manner as per the functionality described. The computer system 1000 may operate as a standalone device or a connected (e.g., networked) device that connects to other machines. In a networked deployment, the machine may operate in the capacity of a server machine or a client machine in a server-client network environment, or as a peer machine in a peer-to-peer (or distributed) network environment.

The computer system 1000 may be a server computer, a client computer, a personal computer (PC), a tablet PC, a smartphone, an internet of things (IoT) appliance, a network router, switch or bridge, or other machine capable of executing instructions 1024 (sequential or otherwise) that enable actions as set forth by the instructions 1024. Further, while only a single machine is illustrated, the term "machine" shall also be taken to include any collection of machines that individually or jointly execute instructions 1024 to perform any one or more of the methodologies discussed herein.

The example computer system 1000 includes a processing system 1002. The processor system 1002 includes one or more processors. The processor system 1002 may include, for example, a central processing unit (CPU), a graphics processing unit (GPU), a neural network processor (NPU), a digital signal processor (DSP), a controller, a state machine, one or more application specific integrated circuits (ASICs), one or more radio-frequency integrated circuits (RFICs), or any combination of these. The processor system 1002 executes an operating system for the computing system 1000. The computer system 1000 also includes a memory system 1004. The memory system 1004 may include or more memories (e.g., dynamic random access memory (RAM), static RAM, cache memory). The computer system 1000 may include a storage system 1016 that includes one or more machine readable storage devices (e.g., magnetic disk drive, optical disk drive, solid state memory disk drive).

The storage unit 1016 stores instructions 1024 (e.g., software) embodying any one or more of the methodologies or functions described herein. For example, the instructions 1024 may include instructions for implementing the functionalities of the data processing service 102 as described herein. The instructions 1024 may also reside, completely or at least partially, within the memory system 1004 or within the processing system 1002 (e.g., within a processor cache memory) during execution thereof by the computer system 1000, the main memory 1004 and the processor system 1002 also constituting machine-readable media. The instructions 1024 may be transmitted or received over a network 1026, such as the network 1026, via the network interface device 1020.

The storage system 1016 should be taken to include a single medium or multiple media (e.g., a centralized or distributed database, or associated caches and servers communicatively coupled through the network interface system 1020) able to store the instructions 1024. The term "machine-readable medium" shall also be taken to include any medium that is capable of storing instructions 1024 for execution by the machine and that cause the machine to perform any one or more of the methodologies disclosed herein. The term "machine-readable medium" includes, but not be limited to, data repositories in the form of solid-state memories, optical media, and/or magnetic media.

In addition, the computer system 1000 can include a display system 1010. The display system 1010 may driver firmware (or code) to enable rendering on one or more visual devices, e.g., drive a plasma display panel (PDP), a liquid crystal display (LCD), or a projector. The computer system 1000 also may include one or more input/output systems 1012. The input/output (IO) systems 1012 may include input devices (e.g., a keyboard, mouse (or trackpad), a pen (or stylus), microphone) or output devices (e.g., a speaker). The computer system 1000 also may include a network interface system 1020. The network interface system 1020 may include one or more network devices that are configured to communicate with an external network 1026. The external network 1026 may be a wired (e.g., ethernet) or wireless (e.g., WiFi, BLUETOOTH, near field communication (NFC).

The processor system 1002, the memory system 1004, the storage system 1016, the display system 1010, the IO systems 1012, and the network interface system 1020 are communicatively coupled via a computing bus 1008.

### ADDITIONAL CONSIDERATIONS

The foregoing description of the embodiments of the disclosed subject matter have been presented for the purpose of illustration; it is not intended to be exhaustive or to limit the disclosed embodiments to the precise forms disclosed. Moreover, persons skilled in the relevant art can appreciate that many modifications and variations are possible in light of the disclosed subject matter.

Some portions of this description describe various embodiments of the disclosed subject matter in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments of the disclosed subject matter may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments of the present disclosure may also relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the inventive subject matter. It is therefore intended that the scope of the disclosed embodiments be limited not by this detailed description, but rather by any claims that issue on an application based hereon. Accordingly, the disclosure of the embodiments of the disclosed subject matter is intended to be illustrative, but not limiting, of the scope of the subject matter, which is set forth in the following claims.

The following numbered embodiments form part of the description:
1. A computer-implemented method, comprising:
   accessing a set of devices configured with hardware accelerators, the set of devices configured to execute operations for a set of experts of a mixture of experts (MoE) for a feed forward network of a transformer architecture;
   identifying one or more batches of samples from a training dataset to process an iteration of a training process for a machine-learning model;
   for a device, executing operations of a router instance on the respective batch of token sequences for the device to determine a first subset of tokens to process with the dedicated expert for the device and a second subset of tokens to process with a subset of experts on a subset of the devices;
   performing a first all-to-all operation to transmit the second subset of tokens to the subset of devices and to obtain a third subset of tokens from other devices;
   while performing the first all-to-all operation, executing at least a portion of operations of a shared expert on the batch of token sequences on the device;
   executing at least a portion of operations of the dedicated expert for the device on the first subset of tokens and the third subset of tokens on the device to generate a first subset of output tokens and a third subset of output tokens; and
   generating an output for the feed forward network based at least on output tokens from the shared expert and output tokens for the dedicated expert for the device.
2. The computer-implemented method of embodiment 1, further comprising:
   performing a second all-to-all operation to transmit the third subset of output tokens to the other devices and obtain a second subset of output tokens from the subset of the devices; and
   while performing the second all-to-all operation, executing at least a remaining portion of the operations of the shared expert.
3. The computer-implemented method of embodiment 1, wherein the output for the feed forward network is generated based at least on the output tokens for the dedicated expert for the device that includes the first subset of output tokens and the second subset of output tokens.
4. The computer-implemented method of embodiment 1, wherein the transformer architecture includes an attention layer and the batch of token sequences for the device is obtained from attention outputs of the attention layer.
5. The computer-implemented method of embodiment 1, further comprising:
   computing a loss function for the iteration of the training process;
   obtaining gradients for the first subset of output tokens and the second subset of output tokens;
   performing a third all-to-all operation to transmit the gradients for the second subset of output tokens to the subset of devices and to obtain the gradients for the third subset of output tokens from the other devices; and
   while performing the third all-to-all operation, computing gradients for weights for the remaining portion of the operations of the shared expert.
6. The computer-implemented method of embodiment 1, further comprising:
   computing gradients for weights of the dedicated expert configured on the device;
   obtaining gradients for the first subset of tokens and the third subset of tokens;
   performing a fourth all-to-all operation to transmit the gradients for the third subset of tokens to the other devices and to obtain gradients for the second subset of tokens from the subset of devices; and
   while performing the fourth all-to-all operation, computing gradients for weights for the portion of the operations of the shared expert.
7. The computer-implemented method of embodiment 1, wherein a sample in the one or more batches of samples from a training dataset represents a sequence of text units.
8. A non-transitory computer readable storage medium comprising stored program code, wherein the program code comprises instructions that when executed causes a processor system to:
   access a set of devices configured with hardware accelerators, the set of devices configured to execute operations for a set of experts of a mixture of experts (MoE) for a feed forward network of a transformer architecture;
   identify one or more batches of samples from a training dataset to process an iteration of a training process for a machine-learning model;
   for a device, execute operations of a router instance on the respective batch of token sequences for the device to determine a first subset of tokens to process with the dedicated expert for the device and a second subset of tokens to process with a subset of experts on a subset of the devices;
   perform a first all-to-all operation to transmit the second subset of tokens to the subset of devices and to obtain a third subset of tokens from other devices;
   while performing the first all-to-all operation, execute at least a portion of operations of a shared expert on the batch of token sequences on the device;
   execute at least a portion of operations of the dedicated expert for the device on the first subset of tokens and the third subset of tokens on the device to generate a first subset of output tokens and a third subset of output tokens; and
   generate an output for the feed forward network based at least on output tokens from the shared expert and output tokens for the dedicated expert for the device.
9. The non-transitory computer readable storage medium of embodiment 8, wherein the instructions when executed further causes the processor system to:
   perform a second all-to-all operation to transmit the third subset of output tokens to the other devices and obtain a second subset of output tokens from the subset of the devices; and
   while performing the second all-to-all operation, execute at least a remaining portion of the operations of the shared expert.
10. The non-transitory computer readable storage medium of embodiment 8, wherein the output for the feed forward network is generated based at least on the output tokens for the dedicated expert for the device that includes the first subset of output tokens and the second subset of output tokens.
11. The non-transitory computer readable storage medium of embodiment 8, wherein the transformer architecture includes an attention layer and the batch of token sequences for the device is obtained from attention outputs of the attention layer.
12. The non-transitory computer readable storage medium of embodiment 8, wherein the instructions when executed further causes the processor system to:
   compute a loss function for the iteration of the training process;
   obtain gradients for the first subset of output tokens and the second subset of output tokens;
   perform a third all-to-all operation to transmit the gradients for the second subset of output tokens to the subset of devices and to obtain the gradients for the third subset of output tokens from the other devices; and
   while performing the third all-to-all operation, compute gradients for weights for the remaining portion of the operations of the shared expert.
13. The non-transitory computer readable storage medium of embodiment 8, wherein the instructions when executed further causes the processor system to:
   compute gradients for weights of the dedicated expert configured on the device;
   obtain gradients for the first subset of tokens and the third subset of tokens;
   perform a fourth all-to-all operation to transmit the gradients for the third subset of tokens to the other devices and to obtain gradients for the second subset of tokens from the subset of devices; and
   while performing the fourth all-to-all operation, compute gradients for weights for the portion of the operations of the shared expert.
14. The non-transitory computer readable storage medium of embodiment 8, wherein a sample in the one or more batches of samples from a training dataset represents a sequence of text units.
15. A computer system, comprising:
   a processor system; and
   a non-transitory computer readable storage medium comprising stored program code, wherein
   the program code comprises instructions that when executed causes a processor system to:
      access a set of devices configured with hardware accelerators, the set of devices configured to execute operations for a set of experts of a mixture of experts (MoE) for a feed forward network of a transformer architecture;
      identify one or more batches of samples from a training dataset to process an iteration of a training process for a machine-learning model;
      for a device, execute operations of a router instance on the respective batch of token sequences for the device to determine a first subset of tokens to process with the dedicated expert for the device and a second subset of tokens to process with a subset of experts on a subset of the devices;
      perform a first all-to-all operation to transmit the second subset of tokens to the subset of devices and to obtain a third subset of tokens from other devices;
      while performing the first all-to-all operation, execute at least a portion of operations of a shared expert on the batch of token sequences on the device;
      execute at least a portion of operations of the dedicated expert for the device on the first subset of tokens and the third subset of tokens on the device to generate a first subset of output tokens and a third subset of output tokens; and
      generate an output for the feed forward network based at least on output tokens from the shared expert and output tokens for the dedicated expert for the device.
16. The computer system of embodiment 15, wherein the instructions when executed further causes the processor system to:
   perform a second all-to-all operation to transmit the third subset of output tokens to the other devices and obtain a second subset of output tokens from the subset of the devices; and
   while performing the second all-to-all operation, execute at least a remaining portion of the operations of the shared expert.
17. The computer system of embodiment 15, wherein the output for the feed forward network is generated based at least on the output tokens for the dedicated expert for the device that includes the first subset of output tokens and the second subset of output tokens.
18. The computer system of embodiment 15, wherein the transformer architecture includes an attention layer and the batch of token sequences for the device is obtained from attention outputs of the attention layer.
19. The computer system of embodiment 15, wherein the instructions when executed further causes the processor system to:
   compute a loss function for the iteration of the training process;
   obtain gradients for the first subset of output tokens and the second subset of output tokens;
   perform a third all-to-all operation to transmit the gradients for the second subset of output tokens to the subset of devices and to obtain the gradients for the third subset of output tokens from the other devices; and
   while performing the third all-to-all operation, compute gradients for weights for the remaining portion of the operations of the shared expert.
20. The computer system of embodiment 15, wherein the instructions when executed further causes the processor system to:
   compute gradients for weights of the dedicated expert configured on the device;
   obtain gradients for the first subset of tokens and the third subset of tokens;
   perform a fourth all-to-all operation to transmit the gradients for the third subset of tokens to the other devices and to obtain gradients for the second subset of tokens from the subset of devices; and
   while performing the fourth all-to-all operation, compute gradients for weights for the portion of the operations of the shared expert.

## Claims

1. A computer-implemented method, comprising:
accessing a set of devices configured with hardware accelerators, the set of devices configured to execute operations for a set of experts of a mixture of experts (MoE) for a feed forward network of a transformer architecture;
identifying one or more batches of samples from a training dataset to process an iteration of a training process for a machine-learning model;
for a device, executing operations of a router instance on the respective batch of token sequences for the device to determine a first subset of tokens to process with the dedicated expert for the device and a second subset of tokens to process with a subset of experts on a subset of the devices;
performing a first all-to-all operation to transmit the second subset of tokens to the subset of devices and to obtain a third subset of tokens from other devices;
while performing the first all-to-all operation, executing at least a portion of operations of a shared expert on the batch of token sequences on the device;
executing at least a portion of operations of the dedicated expert for the device on the first subset of tokens and the third subset of tokens on the device to generate a first subset of output tokens and a third subset of output tokens; and
generating an output for the feed forward network based at least on output tokens from the shared expert and output tokens for the dedicated expert for the device.

2. The computer-implemented method of claim 1, further comprising:
performing a second all-to-all operation to transmit the third subset of output tokens to the other devices and obtain a second subset of output tokens from the subset of the devices; and
while performing the second all-to-all operation, executing at least a remaining portion of the operations of the shared expert.

3. The computer-implemented method of claim 1 or 2, wherein the output for the feed forward network is generated based at least on the output tokens for the dedicated expert for the device that includes the first subset of output tokens and the second subset of output tokens.

4. The computer-implemented method of any preceding claim, wherein the transformer architecture includes an attention layer and the batch of token sequences for the device is obtained from attention outputs of the attention layer.

5. The computer-implemented method of any preceding claim, further comprising:
computing a loss function for the iteration of the training process;
obtaining gradients for the first subset of output tokens and the second subset of output tokens;
performing a third all-to-all operation to transmit the gradients for the second subset of output tokens to the subset of devices and to obtain the gradients for the third subset of output tokens from the other devices; and
while performing the third all-to-all operation, computing gradients for weights for the remaining portion of the operations of the shared expert.

6. The computer-implemented method of any preceding claim, further comprising:
computing gradients for weights of the dedicated expert configured on the device;
obtaining gradients for the first subset of tokens and the third subset of tokens;
performing a fourth all-to-all operation to transmit the gradients for the third subset of tokens to the other devices and to obtain gradients for the second subset of tokens from the subset of devices; and
while performing the fourth all-to-all operation, computing gradients for weights for the portion of the operations of the shared expert.

7. The computer-implemented method of any preceding claim, wherein a sample in the one or more batches of samples from a training dataset represents a sequence of text units.

8. A non-transitory computer readable storage medium comprising stored program code, wherein the program code comprises instructions that when executed causes a processor system to perform the method of any preceding claim.

9. A computer system, comprising:
a processor system; and
a non-transitory computer readable storage medium comprising stored program code, wherein the program code comprises instructions that when executed causes a processor system to perform the method of any of claims 1 to 7.

## Amended claims

### Amended claims in accordance with Rule 137(2) EPC.

1. A computer-implemented method performed by a data processing service, the method comprising:
accessing a set of devices configured with hardware accelerators, the set of devices configured to execute operations for a set of experts of a mixture of experts (MoE) for a feed forward network of a transformer architecture, the transformer architecture further comprising an attention block;
identifying one or more batches of samples from a training dataset to process an iteration of a training process for the transformer architecture;
for a device of the set of devices, executing operations of a router instance on a respective batch of token sequences for the device to determine a first subset of tokens to process with the dedicated expert for the device and a second subset of tokens to process with a subset of experts on a subset of the devices, wherein the batch of token sequences for the device is obtained from attention outputs of the attention block when given, as inputs, one or more token sequences encoding the samples;
performing a first all-to-all operation to transmit the second subset of tokens to the subset of devices and to obtain a third subset of tokens from other devices;
while performing the first all-to-all operation, executing at least a portion of operations of a shared expert on the batch of token sequences on the device;
executing at least a portion of operations of the dedicated expert for the device on the first subset of tokens and the third subset of tokens on the device to generate a first subset of output tokens and a third subset of output tokens; and
generating an output for the feed forward network based at least on output tokens from the shared expert and output tokens for the dedicated expert for the device.

2. The computer-implemented method of claim 1, further comprising:
performing a second all-to-all operation to transmit the third subset of output tokens to the other devices and obtain a second subset of output tokens from the subset of the devices; and
while performing the second all-to-all operation, executing at least a remaining portion of the operations of the shared expert.

3. The computer-implemented method of claim 2, wherein the output for the feed forward network is generated based at least on the first subset of output tokens generated by the dedicated expert for the device, and the second subset of output tokens.

4. The computer-implemented method of any preceding claim, further comprising:
computing a loss function for the iteration of the training process;
obtaining gradients for the first subset of output tokens and the second subset of output tokens;
performing a third all-to-all operation to transmit the gradients for the second subset of output tokens to the subset of devices and to obtain the gradients for the third subset of output tokens from the other devices; and
while performing the third all-to-all operation, computing gradients for weights for the remaining portion of the operations of the shared expert.

5. The computer-implemented method of any preceding claim, further comprising:
computing gradients for weights of the dedicated expert configured on the device;
obtaining gradients for the first subset of tokens and the third subset of tokens;
performing a fourth all-to-all operation to transmit the gradients for the third subset of tokens to the other devices and to obtain gradients for the second subset of tokens from the subset of devices; and
while performing the fourth all-to-all operation, computing gradients for weights for the portion of the operations of the shared expert.

6. The computer-implemented method of any preceding claim, wherein a sample in the one or more batches of samples from a training dataset represents a sequence of text units.

7. A non-transitory computer readable storage medium comprising stored program code, wherein the program code comprises instructions that when executed causes a processor system to perform the method of any preceding claim.

8. A computer system, comprising:
a processor system; and
a non-transitory computer readable storage medium comprising stored program code, wherein the program code comprises instructions that when executed causes a processor system to perform the method of any of claims 1 to 6.
